# FASCICULE DE BREVET EUROPEEN

(11) **EP 3 787 957 B1**
(45) Date de publication et mention de la délivrance du brevet: **30.03.2022**
(21) Numéro de dépôt: 19742819.6
(22) Date de dépôt: 12.04.2019
(51) Int. Cl.: B62D 25/06, B62D 25/02

(54) **ARC DE PAVILLON DE TOIT AVEC RAIDISSEUR ARRIERE**
SPRIEGEL MIT HECKVERSTEIFUNG
ROOF ARCH HAVING A REAR STIFFENER

(30) Priorité: 03.05.2018 FR 1853809
(43) Date de publication de la demande: 10.03.2021
(73) Titulaire: PSA Automobiles SA, 78300 Poissy (FR)
(72) Inventeur: BENANE, Said, 94240 L'HAY LES ROSES (FR)
(86) Numéro de dépôt international: PCT/FR2019/050875
(87) Numéro de publication internationale: WO 2019/211539

(56) Documents cités:
- FR-A1- 2 816 575
- US-A1- 2006 202 520
- US-A1- 2017 305 470

## Description

L'invention a trait au domaine de la carrosserie des véhicules automobiles, et plus particulièrement aux arcs de pavillon des ossatures des flancs des véhicules automobiles.

Les caisses de véhicules automobiles sont formées à partir de divers éléments métalliques obtenus par emboutissage et assemblés entre eux essentiellement par soudage, et qui comprennent entre autres un pavillon de toit, un plancher et deux flancs. L'ossature de chacun des flancs est notamment formée d'un arc de pavillon de toit, d'un longeron de bas de caisse et d'un montant milieu, également appelé pied milieu.

Concernant les deux arcs de pavillon de toit, ils encadrent le pavillon de toit et sont reliés à leurs extrémités à une traverse avant d'un montant de baie de pare-brise et à une traverse arrière de pavillon de toit, tout en étant chacun également relié latéralement à un longeron de bas de caisse via un pied avant et un pied arrière. Les arcs de pavillon de toit forment généralement une poutre creuse et rectangulaire dont la face extérieure est recouverte d'une tôle métallique et la face interne, également dénommée doublure d'arc de pavillon de toit, est utilisée pour monter des poignées de virage à proximité latérale des assises passager. Ces poignées de virage, dont la fonction est de permettre aux passagers de se maintenir, doivent être aptes à tenir un effort de l'ordre d'une tonne en statique. Il est donc en ce sens nécessaire que les arcs de pavillon de toit puissent assurer la stabilité mécanique de la carrosserie en tenant les efforts en torsion dynamique mais également un maintien fiable des poignées de virage sur la doublure en tenant les efforts de ces dernières. Si ces mesures peuvent généralement être observées dans la plupart des véhicules de forme classique, il s'avère que pour les véhicules ayant un habitacle avec une allure visuelle dynamique, comme par exemple une silhouette généralement longue et basse, la tenue concomitante des efforts en torsion des arcs de pavillon et des poignées est plus délicate à réaliser. Ceci d'autant plus que la tendance actuelle, visant à la réduction de la consommation en carburant, pousse les constructeurs à utiliser des tôles de plus en plus minces ou des tôles à haute limite élastique ce qui pose aussi des problèmes connexes d'emboutissage en plus des problèmes de résistance mécanique.

Le document D1 (US2006/202520 A1) décrit une structure de véhicule qui comprend deux arcs de pavillon de toit disposés respectivement sur chaque flanc latéral dudit pavillon et formant chacun, une poutre de section creuse et fermée.

Le document D2 (FR2816575 A1) décrit une structure de véhicule comprenant deux arcs de pavillon de toit avec une poutre de section creuse fermée et constante.

L'invention a pour objectif de pallier au moins un des inconvénients de l'état de la technique susmentionné. Plus particulièrement, l'invention a pour objectif d'améliorer la rigidité de la structure d'un véhicule automobile de silhouette dynamique et ce notamment au niveau des arcs de pavillon de toit, de manière à mieux contenir les efforts en torsion dynamique subis par cette structure, tout en renforçant également la tenue des poignées de virage, et cela de façon simple, peu coûteuse et n'entraînant pas une augmentation de la masse du véhicule.

A cet effet, l'invention a pour objet la structure d'un véhicule automobile, comprenant deux arcs de pavillon de toit disposés, respectivement, sur chaque flanc latéral dudit pavillon, et formant, chacun, une poutre de section creuse et fermée ; remarquable en ce que la section creuse et fermée de chacun des deux arcs de pavillon de toit présente une taille qui augmente progressivement sur une portion dudit arc depuis une première zone de liaison avec un pied milieu jusqu'à une deuxième zone de liaison à une traverse arrière de pavillon de toit.

Avantageusement, la portion dudit arc de pavillon de toit est reliée à une traverse de pavillon de toit supplémentaire positionnée en avant de la traverse arrière de pavillon de toit.

Selon un mode avantageux de l'invention, la surface de la section creuse et fermée de chacun des deux arcs de pavillon de toit augmente d'au moins 70% entre les première et deuxième zones.

Selon un mode avantageux de l'invention, la section creuse et fermée de chacun des deux arcs de pavillon de toit est généralement rectangulaire avec une longueur moyenne et une largeur moyenne, ladite longueur augmentant d'au moins 70% entre les première et deuxième zones.

Selon un mode avantageux de l'invention, la section généralement rectangulaire de chacun des deux arcs de pavillon de toit est orientée de sorte que la longueur moyenne de ladite section s'étend suivant l'étendue du flanc correspondant de la structure.

Selon un mode avantageux de l'invention, la longueur moyenne de la section généralement rectangulaire de chacun des deux arcs de pavillon de toit est supérieure à 40mm et/ou inférieure à 60mm à la première zone et supérieure à 80mm et/ou inférieure à 120mm à la deuxième zone.

Selon un mode avantageux de l'invention, la portion de chacun des deux arcs de pavillon de toit, entre les première et deuxième zones, est formée par un profilé de section en U et une doublure fixée audit profilé.

Selon un mode avantageux de l'invention, le profilé de section en U présente une profondeur moyenne qui correspond à au moins 70% de la largeur de la section généralement rectangulaire de chacun des deux arcs de pavillon de toit.

Selon un mode avantageux de l'invention, la section du profilé de section en U comprend une âme, une aile inférieure formant avec ladite âme un angle compris entre 80° et 100°, et une aile supérieure inclinée vers le haut, par rapport à une direction perpendiculaire à ladite âme, d'un angle compris entre 20° et 40°.

Selon un mode avantageux de l'invention, la doublure présente une section en U sur la portion de chacun des deux arcs de pavillon de toit, entre les première et deuxième zones, ladite section présentant une profondeur moyenne inférieure à la profondeur moyenne de la section du profilé de section en U.

Selon un mode avantageux de l'invention, ladite structure est du type berline avec des ouvertures pour quatre portes latérales.

Les mesures de l'invention sont intéressantes en ce qu'elles permettent de renforcer la rigidité des carrosseries des véhicules automobiles, et ce plus particulièrement des arcs de pavillon de toit. Cette invention est d'autant plus intéressante que la poutre de section creuse et fermée des arcs de pavillon de toit comprend, entre le pied milieu et la traverse arrière de pavillon de toit, une portion de poutre à taille variable. Cette portion, de section creuse et fermée, est d'autant plus intéressante qu'elle forme un corps creux paramétré dont la surface s'étend suivant l'étendue du flanc correspondant, en l'occurrence, le pied milieu et la traverse arrière de pavillon de toit, et a pour résultat d'améliorer la tenue des arcs de pavillon de toit aux efforts de torsion dynamique mais également de tenir les efforts des poignées de virage et donc de maintenir ces dernières fermement montées sur les doublures d'arc de pavillon de toit. Cette invention est encore plus intéressante que la configuration et l'agencement de cette portion de poutre à taille variable permet de donner aux véhicules automobiles un côté arrière avec un visuel fluide, effilé, non compact et cela sans augmentation substantielle de leur masse.

D'autres caractéristiques et avantages de la présente invention seront mieux compris à l'aide de la description et des dessins parmi lesquels :
- La figure 1 est une vue partielle et en perspective d'une structure de véhicule automobile avec un arc de pavillon de toit selon l'invention;
- La figure 2 illustre une vue en perspective rapprochée et par-dessus de la portion de l'arc de pavillon de toit de la figure 1 qui est située entre le pied milieu et la traverse arrière de pavillon de toit;
- La figure 3 montre une vue en perspective et par-dessous d'une extrémité de la portion de l'arc de pavillon de toit de la figure 2 :
- Les figures 4, 5, 6, 7 et 8 représentent des vues en coupe transversale de la section de la portion de l'arc de pavillon de toit de la figure 2, respectivement selon les lignes IV-IV', V-V', VI-VI', VII-VII' et VIII-VIII'.

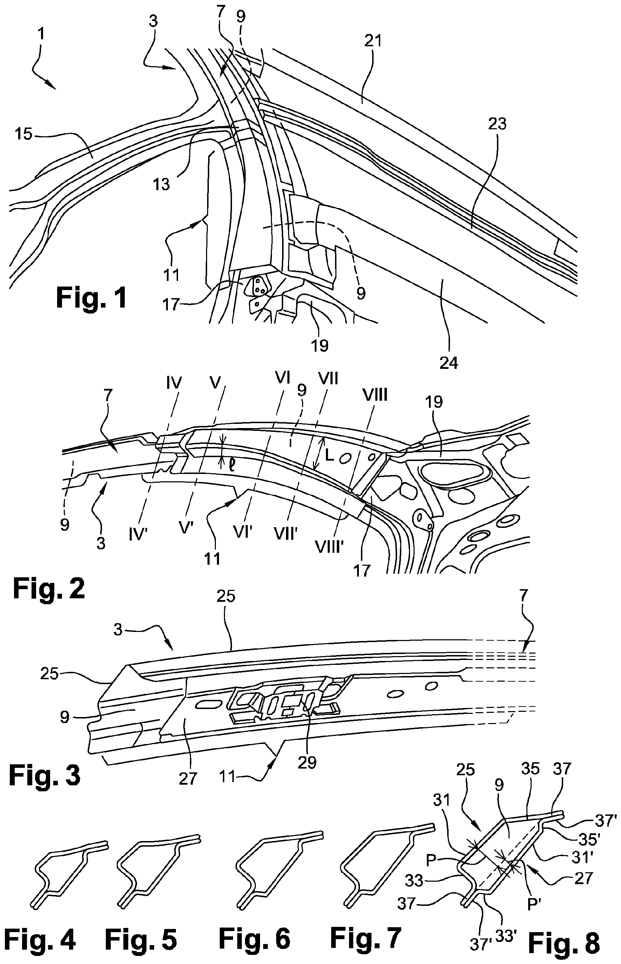

La figure 1 montre une vue partielle et en perspective d'une structure 1 de véhicule automobile avec un arc de pavillon de toit 3 selon l'invention relié à un pied milieu 15, une traverse arrière de pavillon de toit 19, une traverse avant de baie de pare-brise 21 et deux traverses supplémentaires 23, 24 dont une 24 est placée juste à l'avant de la traverse arrière de pavillon de toit 19. En l'occurrence, sur cette figure l'arc de pavillon de toit 3 est celui du flanc gauche d'un véhicule automobile. Cet arc de pavillon de toit 3 est formé classiquement par une poutre 7 de section creuse et fermée 9 mais dont une portion 11 augmente progressivement de taille entre une première zone 13 et une deuxième zone de liaison 17, lesquelles zones 13, 17 sont constituées respectivement par le pied milieu 15 et la traverse arrière de pavillon de toit 19. Avantageusement, la surface de cette portion 11 de la poutre 7 de section creuse et fermée 9 augmente progressivement d'au moins 70% entre les deux zones de liaison 13, 17.

La figure 2 est une vue en perspective rapprochée et par-dessus de la portion 11 de la poutre 7 de l'arc de pavillon de toit 3 de la figure 1, qui est située entre le pied milieu 15 (non représenté sur la figure 2, voir la figure 1) et la traverse arrière de pavillon de toit 19. Comme représenté sur cette figure 2, la section creuse et fermée 9 de cette portion 11 a une longueur moyenne L et une largeur moyenne ℓ. Les notions de longueur et de largeur moyenne sont ici à comprendre dans le sens que la portion 11 a en fait une forme non parfaitement rectangulaire et peut présenter une longueur et/ou une largeur variable suivant la position, dans ladite forme, où elle est mesurée. En l'espèce la longueur L de la section creuse et fermée 9 de la portion 11 augmente d'au moins 70% entre le pied milieu 15 et la traverse arrière de pavillon de toit 19. Selon le mode de réalisation préféré de cette invention, la longueur moyenne L de la portion 11 est notamment supérieure à 40mm et/ou inférieure à 60mm à la première zone de liaison 13 et supérieure à 80mm et/ou inférieure à 120mm à la deuxième zone de liaison 17. Cette portion 11 de section creuse et fermée 9 est en outre orientée de façon à ce que sa longueur moyenne L s'étende suivant l'étendue du flanc correspondant, c'est-à-dire que l'extrémité de la portion 11 qui est du côté de la traverse arrière de pavillon de toit 19 présente une longueur L supérieure à celle de l'extrémité située à l'opposé de cette même traverse arrière de pavillon de toit 19, ou autrement dit au niveau du pied milieu 15. Cette configuration de la portion 11 de l'arc de pavillon de toit 3 permet d'une part de renforcer la résistance à la torsion de cet arc 3 au niveau des deux points de liaison 13, 17 tout en donnant une allure curviligne adaptée à un visuel dynamique.

La figure 3 illustre une vue en perspective et par-dessous d'une partie de la portion 11 de la poutre 7 de l'arc de pavillon de toit 3 de la figure 1 au niveau précisément de l'extrémité qui est reliée à la traverse arrière de pavillon de toit 19. Cette figure permet clairement de visualiser que la structure creuse et fermée 9 de cette portion 11 d'arc de pavillon de toit 3 est en fait formée par un profilé 25 métallique de section en U fixé en regard d'une seconde tôle métallique présentant également une section en U et qui constitue la doublure d'arc de pavillon de toit 27 sur laquelle peuvent être fixées des poignées de virage. Pour des raisons de clarté, sur cette figure 3 seul un dispositif de fixation 29 de poignée de virage, sans poignée proprement dite fixée dessus, a été représenté sur la face externe de la doublure d'arc de pavillon de toit 27. La fixation de la poignée à l'aide de ce dispositif 29 se fait en l'occurrence ici par clippage.

Les figures 4, 5, 6, 7 et 8 sont des vues en coupe transversale de la section creuse et fermée 9 de la portion 11 de l'arc de pavillon de toit 3 de la figure 2, respectivement selon les lignes IV-IV', V-V', VI-VI', VII-VII' et VIII-VIII' c'est-à-dire au niveau de différentes longueur L de la section 9. Sur ces coupes, il est notamment possible d'observer que le profilé 25 de section en U et celui de la doublure d'arc de pavillon de toit 27 de cette section creuse et fermée 9, présentent chacun une âme 31, 31' encadrée par une aile inférieure 33, 33' et une aile supérieure 35, 35', lesquelles ailes 33, 33', 35, 35' se prolongent par des feuillures de jonction 37, 37' permettant de relier par soudure, ou tout autre moyen connu de l'homme du métier, les deux profilés 25, 27. En l'occurrence, le profilé 25 de section en U a préférentiellement une profondeur moyenne P qui correspond à au moins 70% de la largeur L de la section creuse et fermée 9 de la portion 11 de l'arc de pavillon de toit 3 correspondant (voir aussi la figure 2). De son côté le profilé de la doublure d'arc de pavillon de toit 27 présente une profondeur moyenne P' inférieure à la profondeur moyenne P du profilé 25 de section en U. Les figues 4 à 8 permettent par ailleurs de montrer que l'âme 31 du profilé 25 de section en U forme avec son aile supérieure 35 un angle préférentiellement compris entre 80° et 100° et avec son aile supérieure 33, qui a une orientation inclinée vers le haut par rapport à une direction perpendiculaire de l'âme 31, un angle compris préférentiellement entre 20° et 40°. Il est à noter que la figures 4 illustre la zone de la section creuse et fermée 9 de la portion 11 de l'arc de pavillon de toit qui est la plus étroite, c'est notamment au niveau de cette zone que la liaison de la portion 11 est réalisée avec le pied milieu 15 (voir figure 1) mais aussi avec le reste de la poutre 7 de l'arc de pavillon 3. Pour des raisons de visibilité, les références numériques de la figure 3 ont seulement été représentées sur la figure 8, mais elles sont identiques pour les figures 4, 5, 6 et 7.

De manière générale, cette invention a l'avantage de permettre d'accroître de façon simple la résistance à la torsion des arcs de pavillon de toit des véhicules ayant une allure visuelle dynamique, mais également d'accroître en parallèle la résistance des poignées de virage. Cette invention présente aussi l'intérêt de pouvoir être mise en place sur des véhicules du type berline avec des ouvertures pour quatre portes latérales avec hayon ou coffre.

Il va de soi bien entendu que ce qui a été décrit pour l'arc de pavillon de toit gauche est valable pour l'arc de pavillon de toit droit d'un même véhicule automobile.

## Revendications

1. Structure (1) d'un véhicule automobile, comprenant deux arcs de pavillon de toit (3) disposés, respectivement, sur chaque flanc latéral dudit pavillon, et formant, chacun, une poutre (7) de section creuse et fermée (9);
**caractérisée en ce que**
la section creuse et fermée (9) de chacun des deux arcs de pavillon de toit (3) présente une taille qui augmente progressivement sur une portion (11) dudit arc (3) depuis une première zone de liaison (13) avec un pied milieu (15) jusqu'à une deuxième zone de liaison (17) à une traverse arrière de pavillon de toit (19).

2. Structure (1) de véhicule selon la revendication 1, **caractérisée en ce que** la surface de la section creuse et fermée (9) de chacun des deux arcs de pavillon de toit (3) augmente d'au moins 70% entre les première (13) et deuxième zones (17).

3. Structure (1) de véhicule selon l'une des revendications 1 et 2, **caractérisée en ce que** la section creuse et fermée (9) de chacun des deux arcs de pavillon de toit (3) est généralement rectangulaire avec une longueur moyenne (L) et une largeur moyenne (f), ladite longueur (L) augmentant d'au moins 70% entre les première (13) et deuxième (17) zones.

4. Structure (1) de véhicule selon la revendication 3, **caractérisée en ce que** la section (9) généralement rectangulaire de chacun des deux arcs de pavillon de toit (3) est orientée de sorte que la longueur moyenne (L) de ladite section (9) s'étend suivant l'étendue du flanc correspondant de la structure (1).

5. Structure (1) de véhicule selon l'une des revendications 3 et 4, **caractérisée en ce que** la longueur moyenne (L) de la section (9) généralement rectangulaire de chacun des deux arcs de pavillon de toit (3) est supérieure à 40mm et/ou inférieure à 60mm à la première zone (13) et supérieure à 80mm et/ou inférieure à 120mm à la deuxième zone (17).

6. Structure (1) de véhicule selon l'une des revendications 1 à 5, **caractérisée en ce que** la portion (11) de chacun des deux arcs de pavillon de toit (3), entre les première (13) et deuxième zones (17), est formée par un profilé (25) de section en U et une doublure (27) fixée audit profilé (25).

7. Structure (1) de véhicule selon l'une des revendications 3 à 5, et selon la revendication 6, **caractérisée en ce que** le profilé (25) de section en U présente une profondeur moyenne (P) qui correspond à au moins 70% de la largeur (L) de la section (9) généralement rectangulaire de chacun des deux arcs de pavillon de toit (3).

8. Structure (1) de véhicule selon l'une des revendications 6 et 7, **caractérisée en ce que** la section du profilé (25) de section en U comprend une âme (31), une aile inférieure (33) formant avec ladite âme (31) un angle compris entre 80° et 100°, et une aile supérieure (35) inclinée vers le haut, par rapport à une direction perpendiculaire à ladite âme (31), d'un angle compris entre 20° et 40°.

9. Structure (1) de véhicule selon l'une des revendications 6 à 8, **caractérisée en ce que** la doublure (27) présente une section en U sur la portion (11) de chacun des deux arcs de pavillon de toit (3), entre les première (13) et deuxième zones (17), ladite section présentant une profondeur moyenne (P') inférieure à la profondeur moyenne (P) de la section du profilé (25) de section en U.

10. Structure (1) de véhicule selon l'une des revendications 1 à 9, **caractérisée en ce que** ladite structure (1) est du type berline avec des ouvertures pour quatre portes latérales.

## Patentansprüche

1. Struktur (1) eines Kraftfahrzeugs mit zwei Dachhimmelbögen (3), die jeweils an jeder Seitenflanke des Dachhimmels angeordnet sind und jeweils einen Träger (7) mit einem hohlen und geschlossenen Querschnitt (9) bilden;
**dadurch gekennzeichnet, dass**
der hohle und geschlossene Abschnitt (9) jedes der beiden Dachhimmelbögen (3) weist eine Größe auf, die über einen Abschnitt (11) des Dachhimmelbogens (3) von einem ersten Verbindungsbereich (13) mit einem Mittelfuß (15) bis zu einem zweiten Verbindungsbereich (17) mit einem hinteren Dachhimmelsteg (19) allmählich zunimmt.

2. Fahrzeugstruktur (1) nach Anspruch 1, **dadurch gekennzeichnet, dass** die Oberfläche des hohlen und geschlossenen Abschnitts (9) jedes der beiden Dachhimmelbögen (3) zwischen dem ersten (13) und dem zweiten Bereich (17) um mindestens 70% zunimmt.

3. Fahrzeugstruktur (1) nach einem der Ansprüche 1 und 2, **dadurch gekennzeichnet, dass** der hohle und geschlossene Abschnitt (9) jedes der beiden Dachhimmelbögen (3) im Allgemeinen rechteckig mit einer mittleren Länge (L) und einer mittleren Breite (f) ist, wobei die Länge (L) zwischen dem ersten (13) und dem zweiten (17) Bereich um mindestens 70% zunimmt.

4. Fahrzeugstruktur (1) nach Anspruch 3, **dadurch gekennzeichnet, dass** der im Allgemeinen rechteckige Abschnitt (9) jedes der beiden Dachhimmelbögen (3) so ausgerichtet ist, dass die mittlere Länge (L) des Abschnitts (9) sich entlang der Ausdehnung der entsprechenden Flanke der Struktur (1) erstreckt.

5. Fahrzeugstruktur (1) nach einem der Ansprüche 3 und 4, **dadurch gekennzeichnet, dass** die mittlere Länge (L) des im Wesentlichen rechteckigen Abschnitts (9) jedes der beiden Dachhimmelbögen (3) größer als 40 mm und/oder kleiner als 60 mm im ersten Bereich (13) und größer als 80 mm und/oder kleiner als 120 mm im zweiten Bereich (17) ist.

6. Fahrzeugstruktur (1) nach einem der Ansprüche 1 bis 5, **dadurch gekennzeichnet, dass** der Abschnitt (11) jedes der beiden Dachhimmelbögen (3) zwischen dem ersten (13) und dem zweiten Bereich (17) durch ein Profil (25) mit U-förmigem Querschnitt und eine Auskleidung (27) gebildet ist, die an dem Profil (25) befestigt ist.

7. Fahrzeugstruktur (1) nach einem der Ansprüche 3 bis 5 und nach Anspruch 6, **dadurch gekennzeichnet, dass** das Profil (25) mit U-förmigem Querschnitt eine mittlere Tiefe (P) aufweist, die mindestens 70% der Breite (L) des im Wesentlichen rechteckigen Abschnitts (9) jedes der beiden Dachhimmelbögen (3) entspricht.

8. Fahrzeugstruktur (1) nach einem der Ansprüche 6 und 7, **dadurch gekennzeichnet, dass** der Querschnitt des Profils (25) mit U-förmigem Querschnitt einen Steg (31), einen unteren Flügel (33), der mit dem Steg (31) einen Winkel zwischen 80° und 100° bildet, und einen oberen Flügel (35) umfasst, der bezüglich einer Richtung senkrecht zu dem Steg (31) um einen Winkel zwischen 20° und 40° nach oben geneigt ist.

9. Fahrzeugstruktur (1) nach einem der Ansprüche 6 bis 8, **dadurch gekennzeichnet, dass** die Auskleidung (27) einen U-förmigen Querschnitt auf dem Abschnitt (11) jedes der beiden Dachhimmelbögen (3) zwischen dem ersten (13) und dem zweiten Bereich (17) aufweist, wobei der Abschnitt eine mittlere Tiefe (P') aufweist, die geringer ist als die mittlere Tiefe (P) des Querschnitts des U-förmigen Profilteils (25).

10. Fahrzeugstruktur (1) nach einem der Ansprüche 1 bis 9, **dadurch gekennzeichnet, dass** die Struktur (1) vom Typ Limousine mit Öffnungen für vier Seitentüren ist.

## Claims

1. Structure (1) of a motor vehicle, comprising two roof roof arches (3) arranged respectively on each side flank of said roof, and each forming a beam (7) of hollow and closed section (9);
**characterized in that**
the hollow and closed section (9) of each of the two roof roof arches (3) has a size that gradually increases over a portion (11) of said arch (3) from a first connection zone (13) with a middle foot (15) to a second connection zone (17) to a roof roof rear cross-member (19).

2. Vehicle structure (1) according to Claim 1, **characterized in that** the area of the hollow and closed section (9) of each of the two roof roof arches (3) increases by at least 70% between the first (13) and second areas (17).

3. Vehicle structure (1) according to one of Claims 1 and 2, **characterized in that** the hollow and closed section (9) of each of the two roof roof arches (3) is generally rectangular with an average length (L) and an average width (f), said length (L) increasing by at least 70% between the first (13) and second (17) zones.

4. Vehicle structure (1) according to Claim 3, **characterized in that** the generally rectangular section (9) of each of the two roof roof arches (3) is oriented so that the average length (L) of said section (9) extends along the extent of the corresponding flank of the structure (1).

5. Vehicle structure (1) according to one of Claims 3 and 4, **characterized in that** the average length (L) of the generally rectangular section (9) of each of the two roof roof arches (3) is greater than 40 mm and/or less than 60 mm at the first zone (13) and greater than 80 mm and/or less than 120 mm at the second zone (17).

6. Vehicle structure (1) according to one of Claims 1 to 5, **characterized in that** the portion (11) of each of the two roof roof arches (3) between the first (13) and second areas (17) is formed by a profile (25) of U-shaped cross section and a lining (27) fixed to said profile (25).

7. Vehicle structure (1) according to one of Claims 3 to 5, and according to Claim 6, **characterized in that** the profile (25) of U-shaped cross-section has an average depth (P) which corresponds to at least 70% of the width (L) of the generally rectangular cross-section (9) of each of the two roof roof arches (3).

8. Vehicle structure (1) according to one of Claims 6 and 7, **characterized in that** the section of the U-section profile (25) comprises a web (31), a lower flange (33) forming with said web (31) an angle of between 80° and 100°, and an upper flange (35) inclined upwards, with respect to a direction perpendicular to said web (31), by an angle of between 20° and 40°.

9. Vehicle structure (1) according to one of Claims 6 to 8, **characterized in that** the lining (27) has a U-shaped cross-section on the portion (11) of each of the two roof roof arches (3) between the first (13) and second zones (17), the said cross-section having an average depth (P') which is less than the average depth (P) of the cross-section of the U-shaped profile (25).

10. Vehicle structure (1) according to one of Claims 1 to 9, **characterized in that** said structure (1) is of the sedan type with openings for four side doors.
